# EUROPÄISCHE PATENTSCHRIFT

(11) **EP 0 368 132 B1**
(45) Veröffentlichungstag und Bekanntmachung des Hinweises auf die Patenterteilung: **17.03.1993**
(21) Anmeldenummer: 89120248.3
(22) Anmeldetag: 02.11.1989
(51) Int. Cl.: B60J 3/02

(54) **Sonnenblende für Fahrzeuge**
Sun visor for vehicles
Pare-soleil pour des véhicules

(30) Priorität: 10.11.1988 DE 3838117
(43) Veröffentlichungstag der Anmeldung: 16.05.1990
(73) Patentinhaber: Gebr. Happich GmbH, D-42097 Wuppertal (DE)
(72) Erfinder: Viertel, Lothar, D-6636 Altforweiler (DE); Welter, Patrick, F-57730 La Chambre (FR)

(56) Entgegenhaltungen:
- EP-A- 0 344 135
- DE-A- 3 711 570
- DE-B- 2 703 447

## Beschreibung

Die Erfindung bezieht sich auf eine Sonnenblende für Fahrzeuge, die im wesentlichen aus einem Sonnenblendenkörper, einem Schwenklagerböckchen und einem Gegenlagerböckchen besteht, wobei der Sonnenblendenkörper im Bereich seiner oberen Längskante einendig eine Schwenklagerachse mit einem aus dem Sonnenblendenkörper heraustretenden, vom Schwenklagerböckchen aufgenommenen Achsschenkel und anderendig eine Gegenlagerachse, die lösbar in die Lageraufnahme des Gegenlagerböckchens einrastbar ist, aufweist.

Eine Sonnenblende der gattungsgemäßen Art ist z.B. durch die DE-A- 27 03 447 oder DE-A 27 30 926 bekanntgeworden.

Die bekannten Sonnenblenden der vorgenannten Art, haben sich in der Praxis bewährt und auch als gut und brauchbar erwiesen. Es hat sich jedoch gezeigt, daß ihre Herstellung und Montage noch mit gewissen Unzulänglichkeiten und Schwierigkeiten verbunden ist. In erster Linie ist dabei der vielteilige Aufbau der herkömmlichen Sonnenblenden hervorzuheben. So müssen z.B. Drehlagerböckchen und Gegenlagerböckchen separat gefertigt, auf Lager gehalten und montiert werden. Die separate Fertigung ist mit der Bereitstellung unterschiedlicher Herstellungswerkzeuge und insbesondere auch mit der Schwierigkeit der Farbabstimmung verbunden; denn von der Abnehmerschaft wird natürlich verlangt, daß zwischen z.B. Drehlagerböckchen und Gegenlagerböckchen Farbengleichheit besteht. Hierdurch wird auch die Disposition und die Lagerhaltung erschwert. Der vielteilige Aufbau der herkömmlichen Sonnenblenden macht sich aber auch bei der Montage unliebsam bemerkbar, insbesondere dann, wenn karosserieseitige Toleranzabweichungen vorliegen. Es kann dann z.B. leicht dazu kommen, daß die Lageraufnahme des Gegenlagerböckchens nicht mehr exakt mit dem Tragschenkel der Schwenklagerachse fluchtet, womit dann kein behinderungsfreies Abziehen und Wiedereinstecken der Gegenlagerachse aus bzw. in die Lageröffnung des Gegenlagerböckchens mehr möglich ist.

Der Erfindung liegt hiernach, ausgehend von einer Sonnenblende der eingangs genannten Art, die Aufgabe zugrunde, eine Vereinfachung bei der Herstellung und bei der Montage sowie eine Einsparung von Bauteilen zu erzielen.

Zur Lösung dieser Aufgabe ist erfindungsgemäß vorgesehen, daß das Schwenklagerböckchen über ein den Sonnenblendenkörper zumindest bereichsweise überspannendes Verbindungsglied als einstückig mit dem Gegenlagerböckchen vereinigtes Bauelement ausgebildet ist, welches bevorzugterweise aus einem Kunststoff-Spritzgußteil besteht.

Durch die erfindungsgemäße Maßnahme gibt es keine Probleme mehr hinsichtlich einer Farbanpassung. Auch wird die Lagerhaltung und insbesondere die Montage wesentlich vereinfacht.

Gemäß einer Weiterbildung der Erfindung weist das Bauelement ein einstückig angeformtes Gehäuse zur Aufnahme einer elektrischen Beleuchtungseinheit auf, das vorderseitig mit zumindest einer Öffnung für ein Leuchtfenster, einer Linse od. dgl. versehen ist. Dabei kann das Bauteil eine etwa rechteckige Grundform mit einer im mittleren Bereich liegenden, das Gehäuse bildenden Verbreiterung aufweisen, wobei die Vorderseite des Verbindungsglieds und die Vorderseite des Gehäuses etwa auf einer Ebene liegen.

Mit dieser Maßnahme wird nicht nur eine besonders vorteilhafte Vereinigung sonst separat herzustellender und zu montierender Bauteile erzielt sondern auch eine wesentliche Vereinfachung der Sonnenblendenkörper-Herstellung, bei der nun auf den komplizierten Einbau einer Beleuchtungseinheit verzichtet werden kann. Der Sonnenblendenkörper braucht lediglich noch mit einem heute allgemein erwünschten Spiegel ausgerüstet zu werden. Welche Schwierigkeiten bei der Anordnung einer Beleuchtungseinrichtung im Sonnenblendenkörper bisher bestanden, zeigen z.B. die eingangs genannten Druckschriften. Die nunmehr vorgesehene Anordnung der Beleuchtungseinrichtung in einem oberhalb des Sonnenblendenkörpers angeordneten Bauteil, das auch die Lagerböckchen in sich vereinigt, weist neben der wesentlich vereinfachten elektrischen Stromversorgung noch den besonderen Vorteil auf, daß eine Benutzung des am Sonnenblendenkörper üblicherweise vorgesehenen Spiegels nunmehr ohne Blendgefahr erfolgen kann, was darauf zurückzuführen ist, daß nunmehr zwischen der Lichtquelle der Beleuchtungseinheit und dem am Sonnenblendenkörper sitzenden Spiegel ein relativ großer Abstand besteht. Die nunmehr vorgesehene Anordnung der Beleuchtungseinheit, eröffnet auch die Möglichkeit, auf die sonst übliche separate Fahrzeuginnenraumbeleuchtung zu verzichten, insbesondere dann, wenn in weiterer Ausgestaltung der Erfindung vorgesehen wird, die das Gehäuse bildende Verbreiterung so zu gestalten, daß ein Leuchtfenster oder ein Leuchtfensterbereich, den lagerseitigen Längsrand des Sonnenblendenkörpers überragt, und zwar unabhängig davon, ob sich der Sonnenblendenkörper in der Gebrauchslage (vor der Windschutzscheibe) oder in der Nichtgebrauchslage (am Dachhimmel anliegend) befindet.

Ein Ausführungsbeispiel der Erfindung wird nachfolgend anhand der Zeichnung näher erläutert. Es zeigen
Fig. 1 eine Gesamtansicht der Sonnenblende,
Fig. 2 einen Schnitt A-A nach Fig. 1,
Fig. 3 einen Schnitt B-B nach Fig. 1 und
Fig. 4 einen Schnitt C-C nach Fig. 1.

Die Sonnenblende besteht aus einem plattenförmigen Sonnenblendenkörper 1 mit etwa rechteckiger Grundform, der auf einer seiner Breitseiten einen Spiegel 2 trägt, der benutzt werden kann, wenn sich der Sonnenblendenkörper 1 in seiner heruntergeklappten Gebrauchslage befindet. Im Bereich der oberen Längskante 3 weist der Sonnenblendenkörper 1 einendig eine Schwenklagerachse 4 mit einem aus dem Sonnenblendenkörper 1 heraustretenden, von einem Schwenklagerböckchen 5 aufgenommen Achsschenkel 6 und anderendig eine, eine Ausnehmung 7 im Sonnenblendenkörper 1 querende Gegenlagerachse 8, die lösbar in die Lageraufnahme 9 eines Gegenlagerböckchens 10 einrastbar ist, auf.

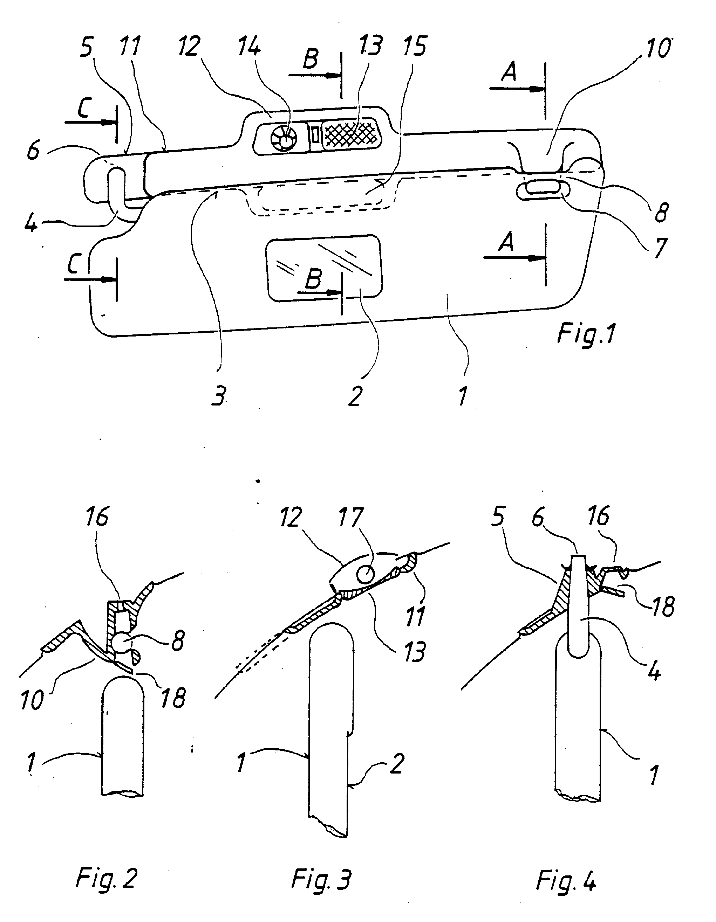

Wie Fig. 1 besonders deutlich zeigt, ist das Schwenklagerböckchen 5 über ein den Sonnenblendenkörper 1 im wesentlichen überspannendes Verbindungsglied 11 als einstückig mit dem Gegenlagerböckchen 10 vereinigtes Bauteil ausgebildet, das aus einem Kunststoff-Spritzgußteil besteht. Im mittleren Bereich ist das Verbindungsglied 11 zu einem Gehäuse 12 verbreitert und das Gehäuse 12, das vorderseitig Leuchtfenster 13, eine Leseleuchte 14 und dgl. aufweist, dient zur Aufnahme einer im einzelnen nicht dargestellten Beleuchtungseinheit (mit einer Lichtquelle 17), die mit der elektrischen Stromversorgung eines Fahrzeuges verbindbar ist. Während das Gehäuse 12, wie mit ausgezogenen Linien dargestellt, das Verbindungsglied 11 nach oben hin verbreitert, kann auch eine nach unten gerichtete Verbreiterung vorgesehen sein, die ein mit strichpunktierter Linie angedeutetes Gehäuse 15 bildet. In dem Gehäuse 15 kann ebenfalls eine Lichtquelle angeordnet sein, vor der ein Leuchtfenster sitzt.

Die Fig. 2 und 4 zeigen noch am Bauteil vorgesehene Montageöffnungen 16 zum Durchführen von Befestigungselementen. Die Montageöffnungen 16 können mittels einklipsbarer Abdeckungen 18 verschlossen werden.

Die neue Sonnenblende weist neben einer einfachen Herstellbarkeit und Montierbarkeit auch ein sehr gefälliges Aussehen auf und sie kann als komplett vormontierte Verkaufseinheit angeliefert werden.

## Patentansprüche

1. Sonnenblende für Fahrzeuge, die im wesentlichen aus einem Sonnenblendenkörper (1), einem Schwenklagerböckchen (5) und einem Gegenlagerböckchen (10) besteht, wobei der Sonnenblendenkörper (1) im Bereich seiner oberen Längskante (3) einendig eine Schwenklagerachse (4) mit einem aus dem Sonnenblendenkörper (1) heraustretenden, vom Schwenklagerböckchen (5) aufgenommenen Achsschenkel (6) und anderendig eine Gegenlagerachse (8), die lösbar in die Lageraufnahme (9) des Gegenlagerböckchens (10) einrastbar ist, aufweist, dadurch gekennzeichnet, daß das Schwenklagerböckchen (5) über ein den Sonnenblendenkörper (1) zumindest bereichsweise überspannendes Verbindungsglied (11) als einstückig mit dem Gegenlagerböckchen (10) vereinigtes Bauelement ausgebildet ist.

2. Sonnenblende nach Anspruch 1, dadurch gekennzeichnet, daß das Bauelement als Kunststoff-Spritzugußteil ausgebildet ist.

3. Sonnenblende nach Anspruch 1 oder 2, dadurch gekennzeichnet, daß das Bauelement ein einstückig angeformtes Gehäuse (12, 15) zur Aufnahme einer elektrischen Beleuchtungseinheit aufweist, das vorderseitig mit zumindest einer Öffnung für ein Leuchtfenster (13) einer Linse (14) od. dgl. versehen ist.

4. Sonnenblende nach Anspruch 3, dadurch gekennzeichnet, daß das Gehäuse (12, 15) im etwa mittigen Bereich des Verbindungsglieds (11) angeformt ist.

5. Sonnenblende nach einem oder mehreren der vorangegangenen Ansprüche, dadurch gekennzeichnet, daß das Bauteil eine etwa rechteckige Grundform mit einer im mittleren Bereich liegenden, das Gehäuse (12, 15) bildenden Verbreiterung aufweist, wobei die Vorderseite des Verbindungsglieds (11) und die Vorderseite des Gehäuses (12, 15) etwa auf einer Ebene liegen.

6. Sonnenblende nach einem oder mehreren der vorangegangenen Ansprüche, dadurch gekennzeichnet, daß das Gehäuse (12, 15) für die Beleuchtungseinrichtung den lagerseitigen Längsrand (3) des Sonnenblendenkörpers (1) überragt, unabhängig davon, ob sich der Sonnenblendenkörpers (1) in der Gebrauchs- oder Nichtgebrauchslage befindet und daß in diesem den Längsrand überragenden Gehäuseteil (12, 15) jeweils zumindest ein Lichtfensterbereich angeordnet ist.

## Claims

1. A sun visor for vehicles, comprising primarily a sun visor body (1), a pivot bearing bracket (5) and an end support bracket (10), in which the sun visor body (1), in the region of its upper longitudinal edge (3), has at one end a pivot bearing axle (4), with an axle journal (6) projecting from the sun visor body (1) and taken up by the pivot bearing bracket (5), and at its other end an end support axle (8) which can be detachably engaged in the bearing mounting (9) of the end support bracket (10), characterised in that the pivot bearing bracket (5) and end support bracket (10) together form one component part joined via a connecting element (11) which extends across at least regions of the sun visor body (1).

2. A sun visor according to Claim 1, characterised in that the component part is a plastics material injection-moulded part.

3. A sun visor according to Claim 1 or 2, characterised in that the component part has a one-piece, integrally-moulded housing (12, 15) to take up the electrical illumination unit, having on its anterior side at least one aperture for a light window (13), a lens (14) or such like.

4. A sun visor according to Claim 3, characterised in that the housing (12, 15) is integrally moulded into the approximately central region of the connecting element (11).

5. A sun visor according to one or more of the preceding Claims, characterised in that the component part has an approximately rectangular shape with an extension in roughly its central region to form the housing (12, 15), whereby the anterior side of the connecting element (11) and the anterior side of the housing (12, 15) lie in approximately the same plane.

6. A sun visor according to one or more of the preceding Claims, characterised in that the housing (12, 15) for the illumination unit projects beyond the longitudinal edge (3) of the sun visor body (1) on the bearing side, independently of whether the sun visor body (1) is in position for use or not, and that at least one light window region is contained within this part of the housing (12, 15) projecting beyond the longitudinal edge.

## Revendications

1. Pare-soleil de véhicule automobile, qui se compose pour l'essentiel d'un corps de pare-soleil (1), d'un support d'axe de pivotement (5) et d'une butée de palier (10), le corps de pare-soleil (1) présentant dans la zone de son bord supérieur (3) à une extrémité, un axe de palier de pivot (4) avec une branche d'axe (6) reçue par le support de palier (5) sortant du corps de pare-soleil (1), et à l'autre extrémité, une butée de palier de pivotement (8) qui peut s'engager de façon amovible dans l'oeil de palier (9), caractérisé en ce que le support de palier de pivotement (5) est formé par un élément formé d'une pièce au support de butée (10) grâce à une pièce de liaison (11) recouvrant au moins localement le corps de pare-soleil.

2. Pare-soleil selon la revendication 1, caractérisé en ce que l'élément est formé d'une pièce en matière synthétique moulée par injection.

3. Pare-soleil selon la revendication 1 ou 2, caractérisé en ce que l'élément comporte un logement formé d'une seule pièce (12,15) pour la réception d'un ensemble d'éclairage électrique, qui est muni du côté frontal d'au moins une ouverture pour une fenêtre d'éclairage (13), d'une lentille (14), ou analogue.

4. Pare-soleil selon la revendication 3, caractérisé en ce que le logement (12, 15) est pratiqué à peu près dans la zone médiane de la pièce de liaison (11).

5. Pare-soleil selon l'une ou plusieurs des revendications précédentes, caractérisé en ce que l'élément présente une forme de base à peu près rectangulaire avec la zone médiane, un élaigissement formant le logement (12, 15), le côté frontal de la pièce de liaison et le côté frontal du logement (12,15) se trouvant à peu près dans le mime plan.

6. Pare-soleil selon une ou plusieurs des revendications précédentes, caractérisé en ce que le logement (12, 15) destiné au dispositif d'éclairage fait saillie par rapport à la bordure longitudinale (3) du corps de pare-soleil, indépendamment de celui-ci, le pare-soleil se trouvant soit dans sa position d'utilisation, soit dans sa position de non utilisation, et en ce que dans cette portion de logement (12,15) dépassant de la bordure longitudinale, se trouve chaque fois au moins une zone de fenêtre d'éclairage.
